# EUROPÄISCHE PATENTANMELDUNG

(11) **EP 0 546 316 A1**
(43) Veröffentlichungstag der Anmeldung: **16.06.1993**
(21) Anmeldenummer: 92118848.8
(22) Anmeldetag: 04.11.1992
(51) Int. Cl.: A47B 95/04

(54) **Abdeckprofil für Plattenkanten**

(30) Priorität: 12.12.1991 DE 9115404 U
(71) Anmelder: REHAU AG + Co, 95111 Rehau (DE)
(72) Erfinder: Borowsky, Ralf, W-8673 Rehau (DE); Haberditzl, Werner, W-8673 Rehau (DE); Bredow, Ulrich, W-8673 Rehau (DE)

(57) **Zusammenfassung**

Die Erfindung betrifft ein Abdeckprofil für Plattenkanten mit einem wenigstens über die Höhe der Plattenkante verlaufenden Eckteil. An der Innenfläche dieses Deckteils ist wenigstens ein längsverlaufender Harpunensteg einstückig angeformt. Über diesen Harpunensteg ist das Abdeckprofil in eine in die Plattenkante durchgehend eingebrachte Aufnahmenut einsetzbar. Im Bereich der Plattenradien ist dabei der Harpunensteg mit die Biegbarkeit des Abdeckprofils erhöhenden Ausnehmungen versehen. Die Erfindung wird darin gesehen, daß die zwischen den Ausnehmungen (21, 22, 23) verbleibenden Bereiche des Harpunensteges (31, 32, 33) Trapezform aufweisen. Die einzelnen Trapeze (31, 32, 33) sind dabei über jeweils eine am Grunde der Ausnehmung (21, 22, 23) stehen bleibende Verbindungsbrücke (St) miteinander verbunden. Die Ausnehmungen (21, 22, 23) sind ferner über die gesamte Länge des Abdeckprofils (1) in den Harpunensteg (12) eingebracht. Dabei ist das Flächenverhältnis einer Ausnehmung (21, 22, 23) zu dem eines Trapezes (31, 32, 33) des Harpunenstegs (12) annähernd 25% zu 75% und der Flankenwinkel (F) der eine Ausnehmung (21, 22, 23) begrenzenden Stegflanken wenigstens 100 und maximal 20°.

## Beschreibung

Die Neuerung betrifft ein Abdeckprofil für Plattenkanten mit einem wenigstens über die Höhe der Plattenkante verlaufenden Deckteil, an dessen Innenfläche wenigstens ein längsverlaufender Harpunensteg einstückig angeformt ist, welcher in eine in die Plattenkante durchgehend eingebrachte Aufnahmenut einsetzbar ist, wobei der Harpunensteg im Bereich der Plattenradien mit die Biegbarkeit des Abdeckprofils erhöhenden Ausnehmungen versehen ist.

Ein derartiges Abdeckprofil ist aus der Schweizerischen Patentschrift 313 349 bekannt. Die dort beschriebene Einfassungsleiste für Tischplatten ist biegbar ausgeführt. Dazu ist der Harpunensteg mit Aussparungen versehen, die nicht bis auf den Grund des Harpunensteges verlaufen. Vielmehr verbleibt ein schmaler Randteil des Steges unverletzt, der dann zur besseren Führung der Leiste in der Haltenut dient und gleichzeitig einen wasserdichten Abschluß sichert. Um diesen flüssigkeitsdichten Abschluß zu erreichen, kann bei der bekannten Halteleiste zusätzlich eine Verkittung oder Verklebung erfolgen.

Als Biegehilfe für solche Abdeckleisten ergibt sich aus der genannten Vorveröffentlichung weiterhin die technische Lösung, daß im Bereich der beabsichtigten Biegung der Harpunensteg nahezu vollständig entfernt wird. Der Nachteil beider Methoden ist darin zu sehen, daß die die Biegung unterstützenden Ausnehmungen exakt in den späteren Biegebereich eingebracht werden müssen. Hier müssen bei der Konfektionierung exakte Maßvorgaben eingehalten werden, was den Konfektionierungsvorgang in viele Einzelbereiche unterteilt und damit erschwert. Bei der Entfernung von größeren Anteilen des Harpunensteges in den Biegebereichen besteht die Gefahr, daß keine Rundung beim Abbiegen erzielt wird, sondern daß hier eine scharfkantige Abbiegung erfolgt. Darüberhinaus ist durch den Wegfall des Harpunensteges im gesamten Biegebereich hier eine Dichtung zwischen dem Abdeckprofil und der Tischplatte nicht mehr gegeben.

Aus dem Deutschen Gebrauchsmuster 1 836 737 ist ein weiteres Abdeckprofil für Plattenkanten bekannt geworden, bei dem in den Harpunensteg an der übergangsstelle zur Abdeckschiene schwächende Ausnehmungen längsverlaufend eingebracht sind, über die Teilbereiche des Harpunensteges im späteren Biegebereich abgebrochen werden können. Hierzu wird der Harpunensteg bis zum Bereich der schwächenden Ausnehmungen eingesägt und dann mit einer Zange herausgebrochen. Es handelt sich hierbei um aufwendige Montagearbeiten, die eine Massenverwertung solcher Profile unter dem Gesichtspunkt moderner technischer Verfahren nicht zulassen.

Hier setzt die Neuerung ein, die es sich zur Aufgabe gestellt hat, die Nachteile des Standes der Technik zu vermeiden und ein Abdeckprofil für Plattenkanten anzugeben, welches trotz der Ausnehmungen im Harpunensteg in allen Biegelagen die nach außen in Erscheinung tretende Rundung beibehält und welches darüberhinaus im maschinellen Einsatz ohne Berücksichtigung speziell einzubringender Biegezonen montiert werden kann. Neuerungsgemäß wird dazu vorgeschlagen, daß die zwischen den Ausnehmungen verbleibenden Bereiche des Harpunensteges Trapezform aufweisen, wobei die einzelnen Trapeze über jeweils eine am Grunde der Ausnehmung stehen bleibende Verbindungsbrücke miteinander verbunden sind, daß die Ausnehmungen über die gesamte Länge des Abdeckprofils in den Harpunensteg eingebracht sind, wobei das Flächenverhältnis einer Ausnehmung zu dem eines bleibenden Bereichs des Harpunensteges annähernd 25% zu 75% und der Flankenwinkel der eine Ausnehmung begrenzenden Stegflanken wenigstens 10 und maximal 20 ist.

Die Vorteile des neuerungsgemäßen Abdeckprofils für Plattenkanten sind darin zu sehen, daß die Einbringung der Ausnehmungen über die gesamte Länge des Abdeckprofils in den Harpunensteg eine Abbiegung des Abdeckprofils in jeder Lage ermöglicht. Mit dem neuerungsgemäß angegebenen Flächenverhältnis einer Ausnehmung zu dem eines verbleibenden Bereichs des Harpunensteges von annähernd 25% zu annähernd 75% sind die optimalen Bereiche bezüglich Stabilität, Haltekraft und Radienverarbeitbarkeit erfaßt.

Der Traganteil des Steges beträgt hier immer noch annähernd 75% bei entsprechend angepaßter Steghöhe. Dieser Traganteil entwickelt sich entsprechend negativ, wenn beispielsweise eine rechteckige Stegform mit rechteckiger Ausnehmung gewählt wird. Bei Einsatz auf geradem Plattenrand vermindert sich dabei der Traganteil des Steges bei gleicher Teilung auf annähernd 50%. Diese negative Auswirkung kann etwas verringert werden, wenn bei rechteckiger Ausnehmung und rechteckigem Traganteil eine kreisbogenförmige Anbindung im Steggrund erfolgt. Der Traganteil des Steges kann hier mit 50% bis 60% angenommen werden. Bei den von der Anmelderin durchgeführten Versuchen hat sich als optimale Lösung der trapezförmige Traganteil und die Ausnehmung in Form eines spitzwinkeligen Dreiecks mit abgerundeter Spitze ergeben. Hierbei ist es weiter wesentlich, daß der Flankenwinkel der das spitzwinkelige Dreieck bildenden Ausnehmung zwischen 10 und 20 beträgt. Bei den Versuchen hat sich ein vorzugsweiser Flankenwinkel von 13_{°} als optimal ergeben. Das Kriterium für die zu wählende Größe des Flankenwinkels ist jeweils der Verarbeitungsradius, in den das Abdeckprofil gebogen werden soll. Hier haben die Versuche ergeben, daß bei der Wahl eines Flankenwinkels unter 10 keine Biegeradien zwischen R 10-15 mehr möglich sind. Gerade diese Biegeradien werden aber bei der Verarbeitung des neuerungsgemäßen Abdeckprofils bevorzugt benötigt.

Bei einem Flankenwinkel über 20_{°} wird der verbleibende tragende Anteil des Harpunensteges zunehmend geringer und bei größeren Steghöhen wird der verbleibende Anteil des Harpunensteges zu spitz und leicht instabil.

Bei der neuerungsgemäß bedingten Einbringung der Ausnehmungen in den Harpunensteg hat es sich als vorteilhaft erwiesen, daß bei der Anlegung der Flankenwinkel der Schnittpunkt der Flankenlinien zweier Stegflanken im Bereich der neutralen Biegelinie des Abdeckprofils liegt. Dies ist erforderlich, um die entsprechenden Verarbeitungsradien einhalten zu können.

Es erscheint ferner zweckmäßig, daß die Stegflanken am Grunde jeder Ausnehmung in einem Radius von 1 mm, vorzugsweise zwischen 0,4 und 0,6 mm verlaufen. Hierbei wird die Ausnehmung so in den Harpunensteg eingebracht, daß am Grunde jeder Ausnehmung zwischen den verbleibenden, trapezförmigen Anteilen des Harpunensteges eine Verbindungsbrücke mit annähernd 1 mm Steghöhe verbleibt. Diese Verbindungsbrücke stabilisiert das Abdeckprofil während des gesamten Handling von der Produktion bis zur endgültigen Verarbeitung.

Es hat sich als vorteilhaft erwiesen, daß der Abstand zweier benachbarter Stegbereiche zwischen 4 mm und 12 mm, vorzugsweise bei 8 mm liegt. Diese Teilung beschreibt den Abstand von Symmetrielinie zu Symmetrielinie zwischen zwei verbleibenden, trapezförmigen Bereichen des Harpunensteges in mm. Mit der bevorzugten Teilung zwischen 4 mm und 12 mm kann eine einwandfreie Radienverarbeitbarkeit des Abdeckprofils erzielt werden. Eine Teilung unter 4 mm würde spezielle Vorkehrungen bei der Ausstanzung erfordern, während eine Teilung 12 mm bei einer Verarbeitung des Abdeckprofils in kleinen Radien (R 10-R 15) zu einem unsymmetrisch eckigen Außenbereich führen würde. Eine optimale Teilung wird dann erreicht, wenn die Höhe des Harpunensteges derart vom Abstand benachbarter Stegbereiche abhängt, daß an der Stegspitze die Kante des Stegbereiches zur Öffnungsweite der zugeordneten Ausnehmung im Verhältnis 50:50 zueinander steht. Dies ist bei einer Gesamtteilung von 8 mm dadurch zu erreichen, daß die Öffnungsweite der zugeordneten Ausnehmung an der Spitze der verbleibenden, trapezförmigen und benachbarten Bereiche des Harpunensteges 4 mm beträgt, während die obere Trapezflanke des Harpunensteganteils ebenfalls 4 mm beträgt.

Das neuerungsgemäße Abdeckprofil für Plattenkanten ist für die automatische Verarbeitung in sogenannten Bearbeitungszentren für Plattenkantenbelegungen einsetzbar. Der besondere Vorteil wird darin gesehen, daß auf diesen Maschinen eine kontinuierliche Verarbeitung des Abdeckprofils möglich ist.

Die Maschinen können auf diese Weise wirtschaftlicher eingesetzt werden als bei der Verarbeitung von Abdeckprofilen nach dem Stand der Technik. Bei diesen Profilen müssen die Verarbeitungsmaschinen im Radienbereich der Abdeckprofile angehalten und die Radienausklinkung vorgenommen werden, während bei dem durchgehend ausgeklinkten Abdeckprofil der Neuerung ein kontinuierliches Durchlaufen des Profils durch die Verarbeitungsmaschine gewährleistet ist.

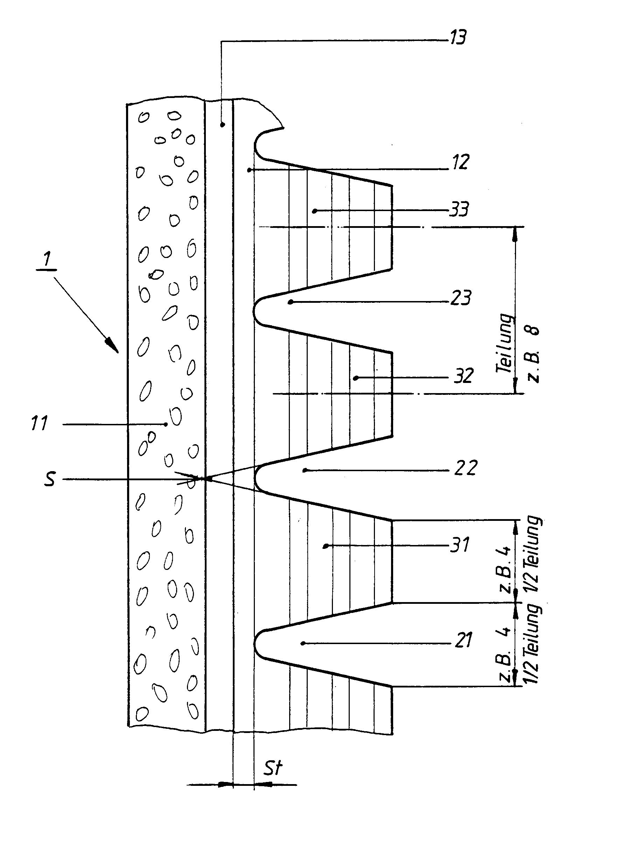

In der Zeichnung ist ein Ausführungsbeispiel eines neuerungsgemäßen Abdeckprofils schematisch dargestellt. Das Abdeckprofil 1 besitzt T-Form und ist mit einem angeschnittenen Deckteil 11 und dem Harpunensteg 12 dargestellt. Das Deckteil 11 ist in der gezeigten Darstellung als kompakter, ggf. strukturierter Wandbereich dargestellt, der im Wege des Koextrusionsverfahrens mit dem Harpunensteg 12 einstückig verbunden werden kann. Selbstverständlich können als Deckteil auch geschäumte Wandbereiche verwendet werden.

Der Harpunensteg 12 ist in Ausnehmungen 21, 22, 23 unterteilt. Zwischen den Ausnehmungen 21 und 22 sowie 22 und 23 ist jeweils der verbleibende, trapezförmige Bereich 31, 32 des Harpunensteges 12 dargestellt. Die Teilung zwischen den verbleibenden Bereichen des Harpunensteges 31, 32, 33 beträgt an der Symmetrielinie jeweils 8 mm. In der gezeigten Darstellung ist diese Teilung jeweils zur Hälfte auf die größte Öffnungsbreite der Ausnehmung und auf die geringste Ausdehnungslänge des verbleibenden, trapezförmigen Bereichs des Harpunensteges ausgelegt.

Der Ausklinkradius R ist im angegebenen Beispiel mit 0,5 gegeben, während der Flankenwinkel F im Beispielsfall 13 _{°} betragt. Der Schnittpunkt S der beiden Flankenwinkel der mittleren Ausnehmung 22 liegt im Bereich der neutralen Faser 13 des Profils. Über dem Ausklinkradius R = 0,5 ist beim Ausklinkvorgang die Stabilisierungsbrücke St stehengeblieben, die für die beim Handling erforderliche Stabilität des Abdeckprofils sorgt.

## Patentansprüche

1. Abdeckprofil für Plattenkanten mit einem wenigstens über die Höhe der Plattenkante verlaufenden Deckteil, an dessen Innenfläche wenigstens ein längsverlaufender Harpunensteg einstückig angeformt ist, welcher in eine in die Plattenkante durchgehend eingebrachte Aufnahmenut einsetzbar ist, wobei der Harpunensteg im Bereich der Plattenradien mit die Biegbarkeit des Abdeckprofils erhöhenden Ausnehmungen versehen ist, dadurch gekennzeichnet, daß die zwischen den Ausnehmungen (21, 22, 23) verbleibenden Bereiche des Harpunensteges (31, 32, 33) Trapezform aufweisen, wobei die einzelnen Trapeze (31, 32, 33) über jeweils eine am Grunde der Ausnehmung (21, 22, 23) stehenbleibende Verbindungsbrücke (St) miteinander verbunden sind, daß die Ausnehmungen (21, 22, 23) über die gesamte Länge des Abdeckprofils (1) in den Harpunensteg (12) eingebracht sind, wobei das Flächenverhältnis einer Ausnehmung (21. 22, 23) zu dem eines verbleibenden Bereichs (31, 32, 33) des Harpunensteges (12) annähernd 25% : 75% und der Flankenwinkel (F) der eine Ausnehmung (21, 22, 23) begrenzenden Stegflanken wenigstens 100 und maximal 20 ist.

2. Abdeckprofil nach Anspruch 1, dadurch gekennzeichnet, daß der Schnittpunkt (S) der Flankenlinien zweier Stegflanken im Bereich der neutralen Biegelinie (13) des Abdeckprofils (1) liegt.

3. Abdeckprofil nach Ansprüchen 1 und 2, dadurch gekennzeichnet, daß die Stegflanken am Grunde jeder Ausnehmung (21, 22, 23) in einen Radius (R) von 1 mm, vorzugsweise zwischen 0,4 mm und 0,6 mm verlaufen.

4. Abdeckprofil nach Anspruch 1, dadurch gekennzeichnet, daß der Abstand zweier benachbarter Stegbereiche (31, 32, 33) zwischen 4 mm und 12 mm, vorzugsweise bei 8 mm liegt.

5. Abdeckprofil nach Ansprüchen 1 und 4, dadurch gekennzeichnet, daß die Höhe des Harpunensteges (12) derart vom Abstand benachbarter Stegbereiche (31, 32, 33) abhängt, daß an der Stegspitze die Kante des Stegbereiches (31, 32, 33) zur Öffnungsbreite der zugeordneten Ausnehmung (21, 22, 23) im Verhältnis 50:50 zueinander steht.
